Europäisches Patentamt

European Patent Office

Office européen des brevets

(19)

(11) Veröffentlichungsnummer: **0 427 703 A1**

# EUROPÄISCHE PATENTANMELDUNG

(21) Anmeldenummer: 90890298.4

(22) Anmeldetag: 07.11.90

(51) Int. Cl.5: **G06F 13/37**

(30) Priorität: 07.11.89 AT 2556/89

(43) Veröffentlichungstag der Anmeldung:
15.05.91 Patentblatt 91/20

(84) Benannte Vertragsstaaten:
BE CH DE DK ES FR GB GR IT LI LU NL SE

(71) Anmelder: Alcatel Austria Aktiengesellschaft
Scheydgasse 41
A-1210 Wien(AT)

(72) Erfinder: Mrlik, Raimund
Wagner Schönkirchstrasse 30
A-2232 Deutsch Wagram(AT)

(54) Dezentrale Zugriffssteuerung auf einen gemeinsamen Datenbus.

(57) Schaltungsanordnung zum dezentralen Steuern des Zugriffs mehrerer gleichrangiger Datenendgeräte (1) auf einen gemeinsamen Datenbus (2), bei der jedem am Bus teilnehmenden Datenendgerät jeweils eine Zugriffsentscheidungsschaltung (3) vorgeschaltet ist und alle Zugriffsentscheidungsschaltungen (3) über einer Ringleitung (4) schiebekettenförmig zusammengeschaltet sind, wobei über die Ringleitung (4) ein Zugriffsberechtigungssignal (Z) taktgesteuert weitergegeben wird.

Die Zugriffsentscheidungsschaltung (3) enthält ein taktgesteuertes Flipflop (13), das den Zustand des zirkulierenden Berechtigungssignals speichert, und eine Busbelegungslogik (14) die bei gleichzeitigem Auftreten eines Busanforderungssignals (A) und des zirkulierenden Berechtigungssignals über eine Taktschaltelogik (6) eine Unterbrechung der Taktzuführung veranlaßt, damit das Weiterzirkulieren des Berechtigungssignals stoppt und weiters ein Belegungssignal (B) an das Datenendgerät (1) sendet.

Fig. 2

EP 0 427 703 A1

Die Erfindung betrifft eine Schaltungsanordnung zum dezentralen Steuern des Zugriffs mehrerer gleichrangiger Datenendgeräte auf einen gemeinsamen Datenbus, bei der jedem am Bus teilnehmenden Datenendgerät jeweils eine Zugriffsentscheidungsschaltung vorgeschaltet ist und alle Zugriffsentscheidungsschaltungen über einer Ringleitung schiebekettenförmig zusammengeschaltet sind, wobei über die Ringleitung ein Zugriffsberechtigungssignal taktgesteuert weitergegeben wird.

Es ist bereits eine derartige Schaltungsanordnung für ein Multiprozessor-System nach der DE OS 33 35 709 bekannt. Darin erfolgt die Zugriffsentscheidung dadurch, daß die vor die Datenendgeräte vorgeschaltete Schaltungsanordnung zwei Zwischenspeicher, vorzugsweise Flipflops mit de einem Takteingang aufweist, wobei der Systemtakt der jeweiligen Prozessoreinheit auf den ersten Zwischenspeicher direkt und auf den Takteingang des zweiten Zwischenspeichers indirekt über einen Inverter geschaltet wird, daß an den Dateneingang des ersten Zwischenspeichers das Busfreigabesignal und an den Dateneingang des zweiten Zwischenspeichers ein internes Busanforderungssignal angelegt wird und daß die beiden Zwischenspeicher über eine Entscheidungslogik gesteuert werden. Am Ausgang des ersten Zwischenspeichers wird das Busfreigabesignal für die in der Ringleitung folgende Prozessoreinheit erzeugt und am Ausgang des zweiten Zwischenspeichers das Busanforderungssignal abgegeben. Die vorgeschlagene Schaltungsanordnung löst zwar die gestellte Aufgabe auf sehr zuverlässige Art, dadurch wird der Bauteileaufwand aber relativ groß.

Eine weitere Lösung bietet die DDR Patentschrift 144691. Hier soll der Datenaustausch zwischen räumlich benachbarten Rechnern eine Mehrrechnersystems mit Hilfe des DMA-Verfahrens durchgeführt werden. Es sind dabei Ein/Ausgabe-Module mit einer ringförmig geschlossenen Schiebekette mit umlaufendem stationären Bitmuster verbunden und jedem Ein/Ausgabemodul ist ein Parallelausgang eines Flipflops der Schiebekette mit angeschlossenem logischen Gatter zur Blockierung oder Freigabe von Anforderungs- und Quitierungssignalen des Ein/Ausgabemoduls zugeordnet. Jedem Flipflop der Schiebekette wird dabei ein Mikrorechner zugeordnet. Zu Beginn der Verarbeitung wird das erste Flipflop gesetzt, alle anderen Flipflops bleiben ungesetzt. Das gesetzte erste Flipflop erlaubt dem Ein/Ausgabemodul das dem ersten Mikrorechner zugeordnet ist eine Bedienungsanforderung an den Ein/Ausgabemodul des benachbarten zweiten Mikrorechner abzusetzen. Erkennt der Ein/Ausgabemodul des zweiten Mikrorechners die Anforderung, sendet er ein Quittiersignal an den anfordernden Ein/Ausgabemodul des ersten Mikrorechners. Damit werden die den beiden Ein/Ausgabemodulen zugeordneten Mikrorechner in den inaktiven Zustand versetzt. Mit Erreichen dieses Zustandes eröffnen die beiden DMA - Module den Datentransfer, der nach einer vorgegebenen Anzahl zu übertragender Worte vom ersten DMA - Modul durch Setzen eines Abbruchsignales beendet wird. Dieses Abbruchsignal bewirkt die zyklische Verschiebung der in der Schiebekette enthaltenen stationären Bitmusters um eine Position nach rechts um den nächsten Datentransfer zwischen benachbarten Rechnern zu ermöglichen. Die zyklische Verschiebung erfolgt beliebig lange.

Diese Lösung weist ebenfalls den Nachteil auf, daß die Steuerlogik sehr aufwendig ist. Sie ist nur dort wirtschaftlich einsetzbar, wo DMA - Probleme zu lösen sind. Bei Erweiterungen steigt der Aufwand nicht = linear mit der Anzahl der beteiligten Datenendgeräte.

Der Erfindung liegt deshalb die Aufgabe zugrunde, eine Zugriffssteuerung zu realisieren, bei der der Aufwand möglichst gering ist, die dezentral und für jedes Datenendgerät identisch ist und somit jederzeit eine beliebige Erweiterung möglich ist.

Diese Aufgabe wird erfindungsgemäß dadurch gelöst, daß die Zugriffsentscheidungsschaltung einen vom Systemtakt getakteten Zustandsspeicher, der den Zustand des Zugriffsberechtigungssignals speichert, und eine Busbelegungslogik, die bei gleichzeitigem Auftreten eines Busanforderungssignals und des Zugriffsberechtigungssignals über eine Taktschaltelogik eine Unterbrechung der Systemtaktzuführung veranlaßt und ein Belegungssignal an das Datenendgerät sendet, enthält.

Der modulare Aufbau dieser Anordnung ermöglicht eine Erweiterung auf beliebig viele Datenendgeräte. Alle Zugriffsentscheidungsschaltungen sind identisch. Sind beispielsweise die Datenendgeräte in einer Anlage räumlich vereint, so kann jede datenliefernde Leiterplatte mit einer Zugriffsentscheidungsschaltung versehen werden, wodurch dann als zentrale Einheit nur mehr die Taktschaltelogik vorhanden ist. Die Steuerschaltung arbeitet mit rotierender Priorität wobei der Rotationszyklus durch Taktänderung veränderbar ist. Es wird keinerlei Prozessorleistung für die Zugriffsentscheidung verbraucht.

Eine Weiterbildung der Erfindung sieht vor, daß die Belegungslogik aus einer AND-Schaltung und einer NAND-Schaltung besteht, deren jeweils erstem Eingang das Zugriffsberechtigungssignal und deren jeweils zweitem Eingang das Anforderungssignal zugeführt wird, und daß das Ausgangssignal der AND-Schaltung das Belegungssignal bildet und dem Datenendgerät zugeführt wird und das Ausgangssignal der NAND-Schaltung der Taktschaltelogik zugeführt wird. Die Busbelegungslogik ist damit durch ein Minimum an Bauelementen realisiert.

Eine Ausgestaltung der Erfindung ist dadurch gekennzeichnet, daß die Taktschaltelogik eine AND-Schaltung ist, deren erstem Eingang der Systemtakt zugeführt wird, deren zweiter Eingang mit den Ausgängen der NAND-Schaltung aller Zugriffsentscheidungsschaltungen verbunden ist und deren Ausgang an die Takteingänge der getakteten Zustandsspeicher angeschlossen ist. Die Taktschaltelogik ist damit eine Torschaltung die bei Belegung des Buses durch ein Datenendgerät den Systemtakt von den Zugriffsentscheidungsschaltungen abschaltet.

Gemäß einer weiteren Ausgestaltung der Erfindung wird als getakteter Zustandsspeicher ein Flipflop verwendet.

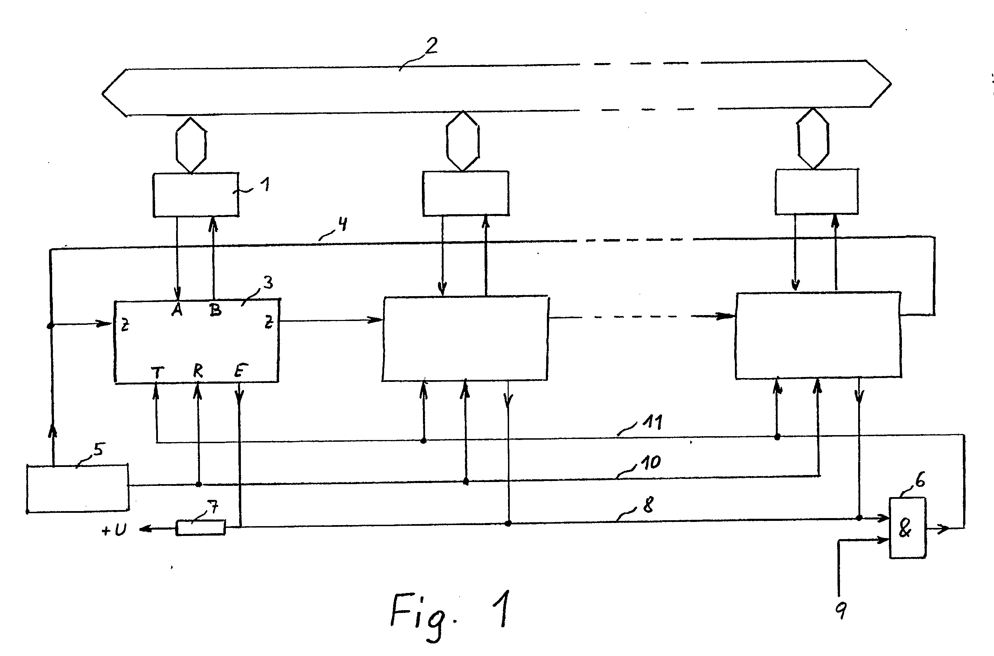

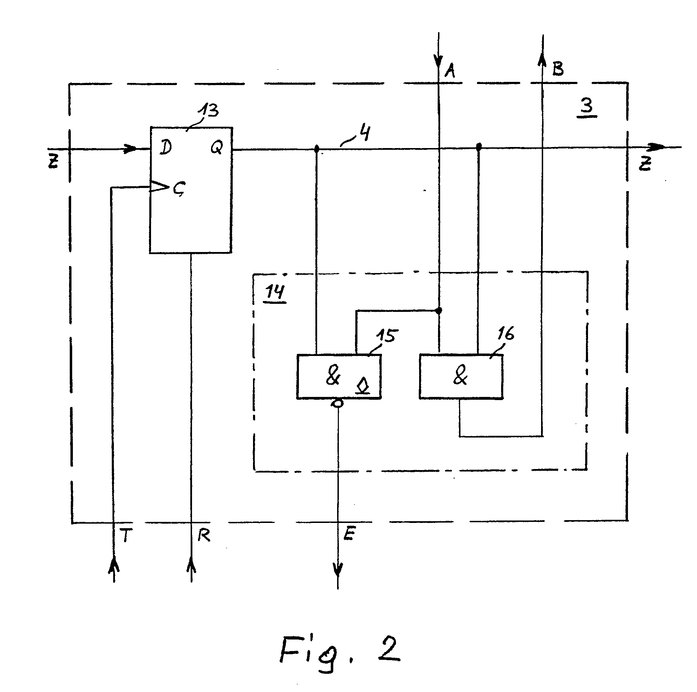

Weitere Einzelheiten und Vorteile der Erfindung sind aus der nachfolgenden Beschreibung eines Ausführungsbeipiels, das in der Zeichnung dargestellt ist, ersichtlich. Dabei zeigt die Fig. 1 das Blockschaltbild der erfindungsgemäßen Anordnung und Fig. 2 die Schaltung der erfindungsgemäßen Zugriffsentscheidungsschaltung.

Wie aus Fig. 1 ersichtlich, hat jedes Datenendgerät 1 Zugriffsmöglichkeit zum bidirektionalen Datenbus 2. Die jeweilige Zugriffserlaubnis für die Datenendgeräte wird durch eine einem jeden Datenendgerät 1 zugeordneten Zugriffsentscheidungsschaltung 3 gesteuert. Dabei sind die Zugriffsentscheidungsschaltungen 3 durch jeweils eine Datenleitung 4 über die die Weitergabe der Zugriffsberechtigung Z erfolgt, ringförmig miteinander verbunden.

Über die Einschalte-Reset-Logik 5 wird das Resetsignal "1" generiert und den Reset-Eingängen R der Zugriffsentscheidungsschaltung 3 zugeführt und damit die Schaltungsanordnung in einer definierte Ausgangsstellung gebracht. Dabei wird der Zustandsspeicher 13 (Fig. 2) einer Zugriffsentscheidungsschaltung 3 auf "1" gesetzt und die Zustandsspeicher aller übrigen Zugriffsentscheidungsschaltungen 3 in den Zustand "0".

Solange kein Anforderungsignal A eines Datenendgerätes an eine Zugriffsentscheidungsschaltung 3 gesendet wird, liegt an allen Entscheidungsausgängen E der Zugriffsentscheidungsschaltungen 3 eine "1" an. Eine Sammelleitung 8 verbindet alle diese Ausgänge E und bildet eine verdrahtete AND-Verknüpfung, die im obengenannten Zustand eine "1" an den Steuereingang einer Taktschaltelogik 6 liefert. Die Taktschaltelogik 6 ist eine AND-Schaltung deren erster Eingang mit dem Systemtakt 9 verbunden ist und deren zweiter Eingang obiger Steuer eingang ist. Der Ausgang der AND-Schaltung 6 ist über die Verteilerleitung 11 mit den Takteingängen T der Zugriffsentscheidungsschaltungen 3 verbunden. Die Zugriffsberechtigung Z, die im Einschaltezustand beispielsweise in der ersten Zugriffsentscheidungsschaltung 3 gespeichert ist, wird nun durch jeden Taktimpuls an die jeweils nächste Zugriffsentscheidungsschaltung 3 weitergegeben. Die Zugriffsentscheidungsschaltungen 3 arbeiten dabei als ringförmig geschlossene Schiebekette.

Sendet ein Datenendgerät 1 ein Busanforderungssignal an den Eingang A der ihr zugehörigen Zugriffsentscheidungsschaltung 3 und erhält diese Zugriffsentscheidungsschaltung 3 die Zugriffsberechtigung Z über die Datenleitung 4, so liegt an deren Entscheidungsausgan E eine "0" an und die als AND-Verknüpfung wirkende Sammelleitung 8 liefert eine "0" an den Steuereingang der AND-Logik 6, die sofort die Zuführung des Systemtaktes 9 zu den Zugriffsentscheidungsschaltungen 3 unterbricht. Die verdrahtete AND-Verknüpfung auf der Sammelleitung 8 wird beispielsweise dadurch realisiert, daß die offenen Kollektorausgänge E der Zugriffsentscheidungsschaltungen 3 über einen Pullup-Widerstand 7 mit der Betriebsspannung +U verbunden sind. Nimmt einer der Ausgänge E den Wert "0" ein, so sinkt die gesamte Sammelleitung 8 auf "0".

Ist der Zugriffsentscheidungsvorgang beendet, sendet die Zugriffsentscheidungsschaltung 3 ein Belegungssignal B an das entsprechende anfordernde Datenendgerät 1.

In der Fig. 2 wird nun die Zugriffsentscheidungsschaltung 3 genauer beschrieben. Sie besteht aus einem getakteten Zustandsspeicher 13, der beispielsweise mittels eines Flipflops realisiert ist, und einer Busbelegungslogik 14, die aus einer AND-Schaltung 16 und einer NAND-Schaltung 15 gebildet wird.

Der Q-Ausgang des Flipflop 13 an dem das Zustandssignal anliegt ist einerseits über die Datenleitung 4 mit dem Eingang D des Flipflop der nächstfolgenden Zugriffsentscheidungsschaltung und andererseits mit jeweils einem Eingang der AND-Schaltung 16 und der NAND-Schaltung 15 verbunden. Die beiden anderen Eingänge der AND-Schaltung 16 und der NAND-Schaltung 15 sind an die Anforderungsleitung A des Datenendgerätes 12 angeschlossen. Der Ausgang der NAND-Schaltung 15 bildet den Entscheidungsausgang E und ist über die Sammelleitung 8 an den Steuereingang der Taktschaltelogik 6 geschaltet, wie aus Fig. 1 ersichtlich. Der Ausgang der AND-Schaltung 16 liefert das Belegungssignal B an das Datenendgerät 12.

Über die Einschaltereset-Leitung 11 werden alle Flipflops 13 in ihre Ausgangsstellung gebracht in der die Ausgänge Q eine "0" zeigen. Liegt nun über die Ringleitung 4 vom Ausgangs Q des vorangeschalteten Flipflops oder von der Einschaltresetlogik 5 der Zustand "1" am Eingang D an, so nimmt beim nächsten Taktimpuls am Eingang C das Flipflop 13 den Zustand "1" an, was am Ausgang Q angezeigt wird und an jeweils einem Eingang der AND-Schaltung 16 bzw. der NAND-Schaltung 15 anliegt. Gelangt vom Datenendgerät 12 als Anforderungssignal A eine "1" an die beiden anderen Eingänge der AND-Schaltung 16 bzw. NAND-Schaltung 15, so schaltet der Ausgang der NAND-Schaltung 15 auf "0" um und die daran angeschaltete Taktschaltelogik 6 unterbricht den weiteren Takt. Damit bleibt der Belegungszustand im Zustandsspeicher 2 gespeichert und das Erlaubnissignal "1" wird vom Ausgang der AND-Schaltung 16 an die Belegungsleitung B an das Datenendgerätes 1 gesandt.

Wird das Anforderungssignal A des Datenendgerätes 1 unterbrochen, d. h. verzichtet das Datenendgerät 1 auf den weiteren Buszugriff, so liegt an dem einen Eingang der NAND-Schaltung 15 ein "0" - Signal an, so daß der Ausgangspegel auf "1" ansteigt. Auf der Sammelleitung 8 und damit am Steuereingang der Taktschaltelogik 6 stehen damit wieder ausschließlich "1" - Signale an, sodaß der Systemtakt 9 wieder an die Flipflops 2 gelangen kann. Mit jedem Taktimpuls wird nun die Zugriffs berechtigung von einem Flipflop zum jeweils nächsten innerhalb der Schiebekette weitergegeben bis ein weiteres Anforderungssignal A eines Datenendgerätes 1 diese Weitergabe wieder unterbricht.

Treten zwei Busanforderungen gleichzeitig auf, so setzt sich jenes Datenendgerät durch, welches in der ringförmigen Schiebekette in Umlaufrichtung der momentanen Zugriffsberechtigung am nächsten liegt. Dadurch kann es zu keinen Datenkollisionen kommen.

Es wird darauf hingewiesen, daß die Verwendung eines taktzustandsgesteuerten D-Flipflops als Zustandsspeicher für die Zugriffsentscheidungsschaltung nur als Beispiel dargestellt ist. Bei entsprechender Beschaltung ist auch jeder andere logische Speicher verwendbar.

**Ansprüche**

1. Schaltungsanordnung zum dezentralen Steuern des Zugriffs mehrerer gleichrangiger Datenendgeräte (1) auf einen gemeinsamen Datenbus (2), bei der jedem am Bus teilnehmenden Datenendgerät jeweils eine Zugriffsentscheidungsschaltung (3) vorgeschaltet ist und alle Zugriffsentscheidungsschaltungen (3) über einer Ringleitung (4) schiebekettenförmig zusammengeschaltet sind, wobei über die Ringleitung (4) ein Zugriffsberechtigungssignal (Z) taktgesteuert weitergegeben wird, **dadurch gekennzeichnet,** daß die Zugriffsentscheidungsschaltung (3) einen vom Systemtakt (9) getakteten Zustandsspeicher (13), der den Zustand des Zugriffsberechtigungssignals (Z) speichert, und eine Busbelegungslogik (14), die bei gleichzeitigem Auftreten eines Busanforderungssignals (A) und des Zugriffsberechtigungssignals (Z) über eine Taktschaltelogik (6) eine Unterbrechung der Systemtaktzuführung veranlaßt und ein Belegungssignal (B) an das Datenendgerät (1) sendet, enthält.

2. Schaltungsanordnung nach Anspruch 1, **dadurch gekennzeichnet,** daß die Belegungslogik (14) aus einer AND-Schaltung (16) und einer NAND-Schaltung (15) besteht, deren jeweils erstem Eingang das Zugriffsberechtigungssignal (Z) und deren jeweils zweitem Eingang das Anforderungssignal (A) zugeführt wird, und daß das Ausgangssignal der AND-Schaltung (16) das Belegungssignal (B) bildet und dem Datenendgerät (1) zugeführt wird und das Ausgangssignal (E) der NAND-Schaltung (15) der Taktschaltelogik (6) zugeführt wird.

3. Schaltungsanordnung nach Anspruch 2, **dadurch gekennzeichnet,** daß die Taktschaltelogik (6) eine AND-Schaltung ist, deren erstem Eingang der Systemtakt (9) zugeführt wird, deren zweiter Eingang mit den Ausgängen (E) der NAND-Schaltung (15) aller Zugriffsentscheidungsschaltungen (3) verbunden ist und deren Ausgang an die Takteingänge (C) der getakteten Zustandsspeicher (13) angeschlossen ist.

4. Schaltungsanordnung nach Anspruch 1, 2 oder 3, **dadurch gekennzeichnet,** daß der getaktete Zustandsspeicher (13) ein Flipflop ist.

Fig. 1

Fig. 2

Europäisches
Patentamt

**EUROPÄISCHER
RECHERCHENBERICHT**

Nummer der Anmeldung

**EP 90 89 0298**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JOURNAL OF TELECOMMUNICATION NETWORKS, Band 2, Nr. 3, 1983, Seiten 307-334, S.Y.W. SU: "A microcomputer network system for distributed relational databases: Design, implementation, and analysis" \* Seiten 312-313, Absatz 4; Figur 3 \* | 1,4 | G 06 F 13/37 |
| A | IDEM | 2,3 | |
| X | IBM TECHNICAL DISCLOSURE BULLETIN, Band 28, Nr. 2, Juli 1985, Seiten 567-569, New York, US; "High speed bus arbiter for bus-oriented multiprocessor systems" \* Seite 568, Zeile 10 - Seite 569, Zeile 29; Figur 2 \* | 1,4 | |
| A | IDEM | 2,3 | |
| X | PATENT ABSTRACTS OF JAPAN, Band 13, Nr. 210 (P-872)[3558], 17. Mai 1989; & JP-A-126 963 (MORI) 30-01-1989 \* Ganzes Dokument \* | 1 | |
| X | US-A-3 629 854 (HAUCK et al.) \* Spalte 3, Zeilen 1-43; Fig. \* | 1,4 | **RECHERCHIERTE SACHGEBIETE (Int. Cl.5)** |
| A | | 2,3 | G 06 F |

Der vorliegende Recherchenbericht wurde für alle Patentansprüche erstellt

| Recherchenort | Abschlußdatum der Recherche | Prüfer |
|---|---|---|
| Den Haag | 19 Februar 91 | NYGREN P.P. |